# EUROPEAN PATENT SPECIFICATION

(11) **EP 2 033 886 B1**
(45) Date of publication and mention of the grant of the patent: **24.10.2012**
(21) Application number: 08252943.9
(22) Date of filing: 04.09.2008
(51) Int. Cl.: B62J 29/00

(54) **Motorcycle**
Motorrad
Motocyclette

(30) Priority: 05.09.2007 JP 2007230810
(43) Date of publication of application: 11.03.2009
(73) Proprietor: Yamaha Hatsudoki Kabushiki Kaisha, Iwata-shi, Shizuoka 438-8501 (JP)
(72) Inventor: Onoue, Tomoki, Shizuoka-ken 438-8501 (JP)
(74) Representative: Moreland, David

(56) References cited:
- EP-A- 1 172 289
- DE-A1- 19 752 188
- JP-U- 59 106 740

## Description

### FIELD OF THE INVENTION

The present invention relates to a motorcycle. In particular the present invention relates to a motorcycle including: a screen arranged forward of a front end portion (head pipe) of a vehicle body frame; a vehicle body cover for covering the sides of the screen; and a rearview mirror arranged at least on one side in a vehicle width direction of the screen.

### BACKGROUND TO THE INVENTION

Motorcycles are known which employ a structure such that left and right rearview mirrors are fixed to the outer surface of a front cover arranged forward of a front fork. For example, in JP-A-10-157681, a front cover has left and right mounting portions formed thereon, and support stays fixed to a vehicle body frame are arranged on the inner surfaces of the mounting portions. Fixing portions of the rearview mirrors are fixed to the support stays with bolts across the mounting portions of the front cover. Further, the fixing portions of the rearview mirrors and the outer peripheral portion of the mounting portions are covered with a boot.

JP59-106740 U discloses a motorcycle wherein a rear view mirror is mounted on a mirror arm. An attachment plate is anchored to a fairing stay by welding. A support stay for supporting the mirror arm is mounted to the attachment plate by bolts. A boot formed with a flexible material is put onto the support stay. A top surface of the support stay protrudes upwardly above a top surface of the fairing. At least a base portion of the boot also clearly projects from the top surface of the fairing.

Incidentally, in the structure of the background art in which the rearview mirrors are arranged on the outer surface of the front cover, the mounting portions on the cover side and the fixing portions on the rearview mirror sides are positioned on the outer surface of the front cover. Thus, running wind flowing along the outer surface of the front cover directly hits on the mounting portions and the fixing portions. For this reason, in the conventional structure, there is raised the problem that the substantial area of receiving the pressure of the running wind becomes large to increase air resistance, which becomes an obstacle to the enhancement of running performance.

Moreover, in the case of a motorcycle used also for running in a circuit, when the motorcycle runs in the circuit, the rearview mirrors are removed. However, in the case of the motorcycle in the background art, even if the rearview mirrors are removed, the mounting portions are left on the front cover, which raises the problem that the mounting portions generate air resistance and that the mounting portions are not preferable also in terms of design.

The present invention has been made in view of the circumstances in the background art. The object of the present invention is to provide a motorcycle that can reduce the air resistance of a vehicle body cover to running wind flowing on the outer surface of the vehicle body cover and that can improve design in a state where rearview mirrors are mounted and in a state where the rearview mirrors are dismounted.

### SUMMARY OF THE INVENTION

In one aspect the present invention is a motorcycle including: a vehicle body frame; a screen arranged forward of a front end portion of the vehicle body frame; a vehicle body cover for covering a side of the screen; and a rearview mirror arranged on one side at least in a vehicle width direction of the screen, wherein the vehicle body frame has a to-be-fixed portion to which the rearview mirror is to be fixed, and in that the rearview mirror has a support boss portion fixed to a to-be-fixed portion of the vehicle body frame, the support boss portion being arranged at a lower position than an extension plane obtained by rearward extending an outer surface of the vehicle body frame.

In another aspect of the present invention there is provided a motorcycle comprising:
a vehicle body frame;
a screen arranged forward of a front end portion of the vehicle body frame;
a vehicle body cover for covering a side of the screen; and
a rearview mirror arranged at least on one side in a vehicle width direction of the screen,
wherein the vehicle body frame has a mounting portion to which the rearview mirror is to be fixed, and wherein the rearview mirror has a support boss portion arranged to be fixed to the mounting portion of the vehicle body frame, the support boss portion being arranged at a lower position than an extension plane obtained by rearward extending an outer surface of the vehicle body frame.

The support boss portion may be arranged rearward of a rear edge of the vehicle body cover.

The rearview mirror may include a stay fixed to the support boss portion and arranged to be configured between an extended position and a retracted position. The stay may be rotatably mounted relative to the boss portion.

The vehicle body cover may have a depressed groove portion formed therein, the depressed groove portion being extended toward the stay.

A support bracket may be provided that is formed on the vehicle body frame and that supports the screen. The mounting portion may be formed on the support bracket.

The mounting portion may be formed rearward of a rear edge of the vehicle body cover when viewed in a plan view.

The screen may have a cutout formed in a portion where the stay is arranged.

The motorcycle may further comprise an elastic part that is sandwiched between the mounting portion of the support bracket and the support boss portion of the rearview mirror. The screen may be sandwiched by the mounting portion and the support boss portion.

The elastic part may be sandwiched between the screen and the support boss portion.

The motorcycle may further comprise a rotary shaft extended in a direction intersecting with the extension plane, wherein a base portion of a stay of the rearview mirror is coupled to the support boss portion via the rotary shaft.

At least the base portion of the stay may be a casting, and a portion of the rotary shaft is inserted and formed in the base portion.

According to a motorcycle of the present invention, the support boss portion of the rearview mirror is arranged at a lower position than an extension plane obtained by rearward extending the outer surface of the vehicle body cover, so that the support boss portion and mounting or to-be-fixed portion are not positioned on the outer surface of the vehicle body cover. Thus, the support boss portion and the mounting or to-be-fixed portion do not become resistance to running wind flowing along the outer surface of the vehicle body cover obstacles. Moreover, the support boss portion and the mounting or to-be-fixed portion are not positioned on the vehicle body cover, so that the vehicle body cover has superfluous parts stripped from its surroundings and hence can improve its outward design by that much. Moreover, when the rearview mirror is removed, nothing is left on the outer surface of the vehicle body cover and its extension plane, which can improve the design of the vehicle body cover.

### BRIEF DESCRIPTION OF THE DRAWINGS

These and other aspects of the present invention will now be described, by way of example only, with reference to the accompanying drawings, in which:
Fig. 1 is a side view of a motorcycle according to one embodiment of the present invention;
Fig. 2 is a plan view of the motorcycle;
Fig. 3 is a front view of the motorcycle;
Fig. 4 is a side view of a front cover and a screen of the motorcycle;
Fig. 5 is a rear view of the front covers;
Fig. 6 is a perspective view, when viewed from a slant rear side, of a rearview mirror of the motorcycle;
Fig. 7 is a perspective view, when viewed from a slant upper side, of the rearview mirror;
Fig. 8 is an exploded view, in perspective, of the rearview mirror;
Fig. 9 is an exploded view, in perspective, of the rearview mirror;
Fig. 10 is a section view (section view taken on a line X-X in Fig. 4) of a fixing portion of the rearview mirror;
Fig. 11 is a section view (section view taken on a line XI-XI in Fig. 10) of the fixing portion of the rearview mirror;
Fig. 12 is a section view of the fixing portion of the rearview mirror;
Fig. 13 is a rear view of a support bracket of the motorcycle; and
Fig. 14 is a side view of the support bracket.

### DETAILED DESCRIPTION OF THE DRAWINGS

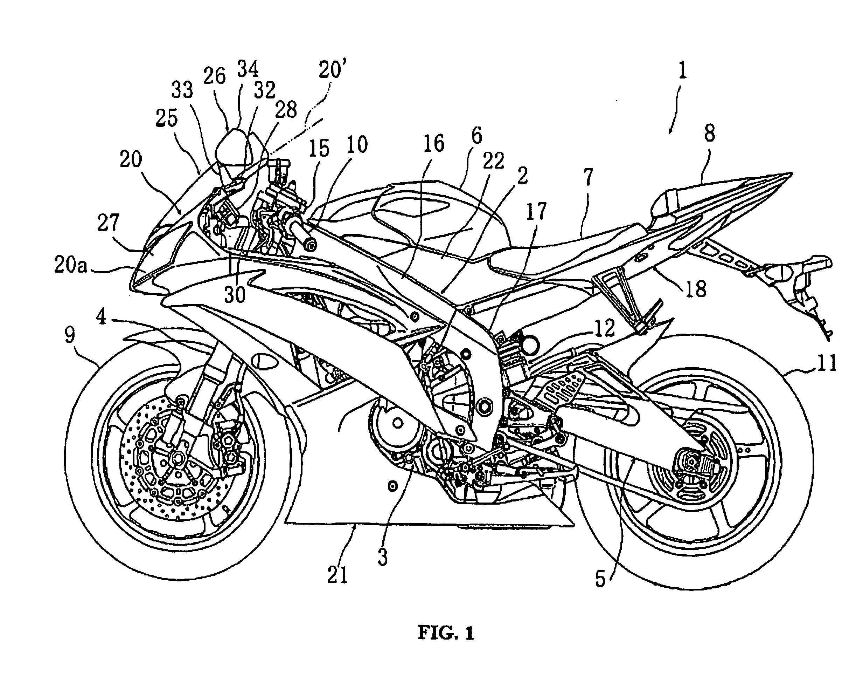

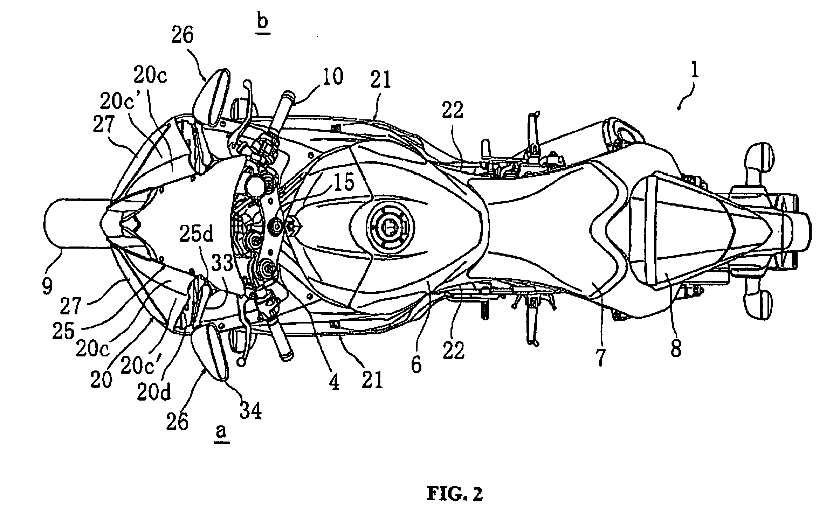

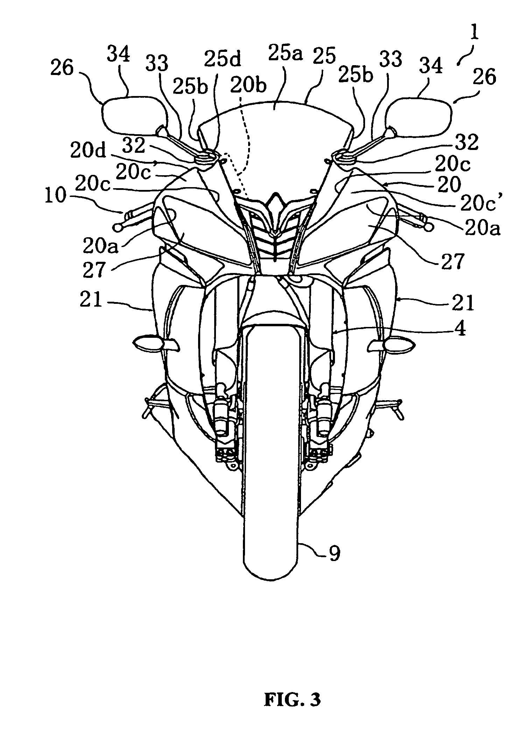

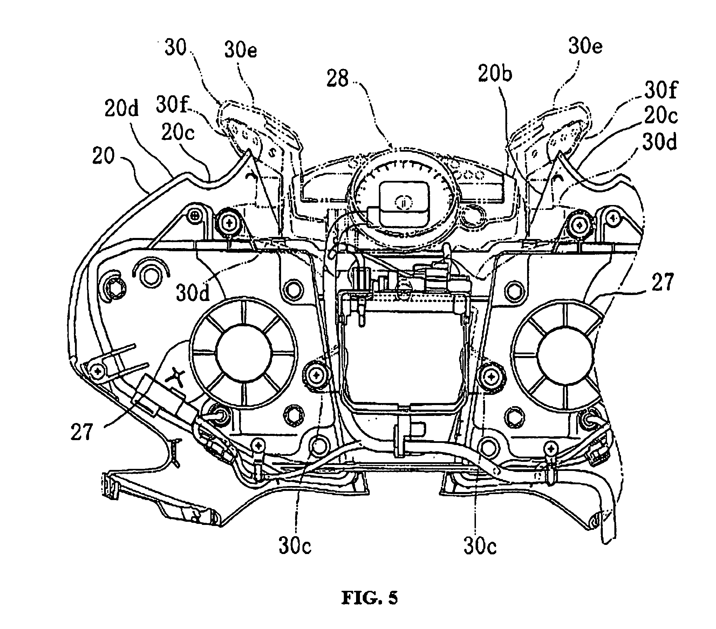

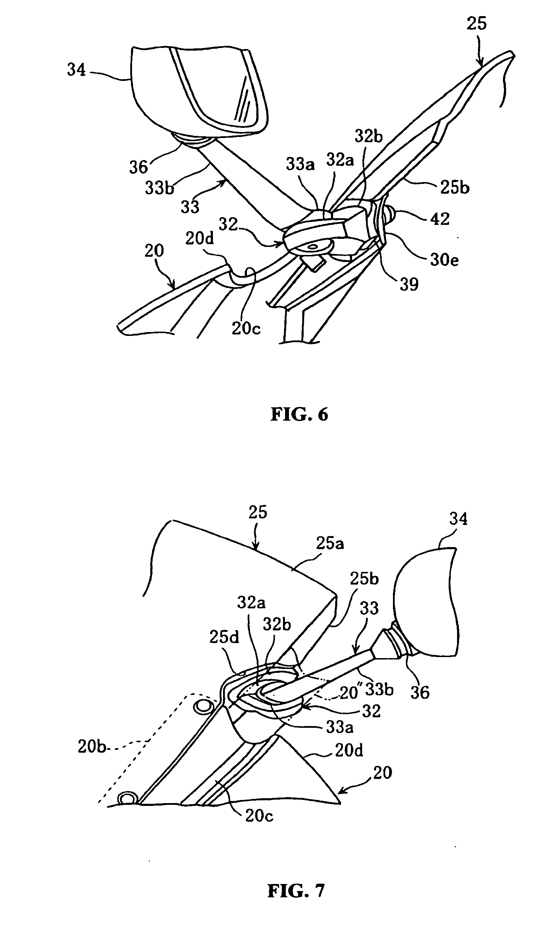

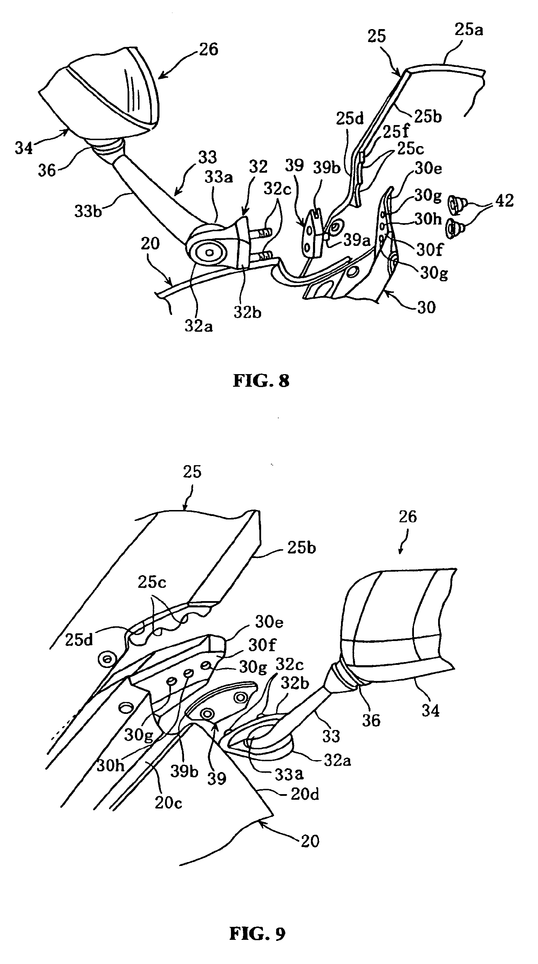

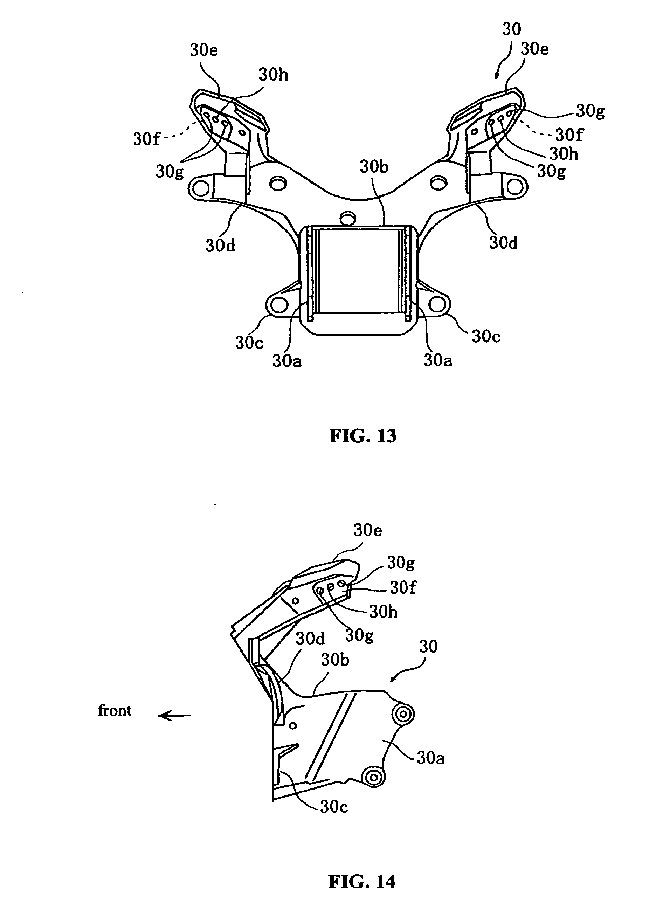

Figs. 1 to 14 are diagrams to show a motorcycle according to one embodiment of the present invention. In the case of referring to "front and rear" and "left and right" in the description of this embodiment, such terms are referred to "front and rear", and "left and right" when viewed in a state where an occupant sits on a seat, unless otherwise specified.

In Fig.1, reference numeral 1 denotes a sport-type motorcycle. The motorcycle 1 includes: a vehicle body frame 2; an engine 3 suspended and supported by the vehicle body frame 2; a front fork 4 supported so as to be steered to the left and right by a head pipe 15 positioned on the front end portion of the vehicle body frame 2; and a rear arm 5 supported so as to be swung up and down relative to the rear bottom end portion of the vehicle body frame 2.

Moreover, the motorcycle 1 includes: a fuel tank 6 mounted above the engine 3 of the vehicle body frame 2; a saddle-type main seat 7 mounted on the rear portion of the fuel tank 6 of the vehicle body frame 2; and a saddle-type tandem seat 8 arranged rearward of the main seat 7.

The shaft of a front wheel 9 is supported by the bottom end portion of the front fork 4, and a separate-type steering handlebar 10 is fixed to the top end portion of the front fork 4.

The shaft of a rear wheel 11 is supported by the rear end portion of the rear arm 5, and a rear cushion 12 is interposed between the rear arm 5 and the vehicle body frame 2.

The vehicle body frame 2 includes: the head pipe 15; left and right main frames 16, 16 expanded outward in a vehicle width direction and extended slantwise rearward downward from the head pipe 15; left and right rear brackets 17, 17 extended downward from the rear end of the left and right main frames 16, 16; and a rear frame 18 extended slantwise rearward upward from the top end portions of the left and right rear brackets 17, 17.

Left and right covers 21, 21 are arranged outside in the vehicle width direction of the left and right main frames 16, 16 so as to cover the bottoms of the main frames 16, 16.

Moreover, tank covers 22, 22 for covering the left and right sides of the fuel tank 6 are interposed between the left and right main frames 16, 16 and the fuel tank 6.

The motorcycle 1 includes: front covers (vehicle body covers) 20, 20 arranged so as to cover the front side of the front fork 4; a screen 25 arranged so as to connect to the front covers 20, 20 and so as to cover the front side of the upper portion of a driver; and a pair of rearview mirrors 26, 26 arranged on the left side (one side) a of the screen 25 and on the right side (other side) b of the screen 25. Thus, the front covers 20, 20 and the screen 25 are arranged forward of the head pipe 15.

The front covers 20, 20 have a pair of left and right lens openings 20a, 20a respectively formed therein, the lens openings 20a, 20a being respectively expanded to the entire region in the front and rear direction of the front covers 20, 20. The front covers 20, 20 have headlights 27, 27 arranged respectively in the left and right lens openings 20a, 20a thereof.

A cutout 20b formed generally and nearly in the shape of a letter V is formed in the center in a vehicle width direction of the front covers 20, 20, and the screen 25 is arranged so as to cover the cutout 20b.

The screen 25 includes: a screen main part 25a which is formed generally and nearly in the shape of a fan having a width in the vehicle width direction narrowed toward the front side when viewed from the front; and left and right flange portions 25b, 25b which are bent and extended downward from the left and right side edges of the screen main part 25a. Moreover, the screen 25 is extended slantwise rearward upward from the rear edges 20d, 20d of the front covers 20, 20.

The front covers 20, 20 have left and right depressed groove portions 20c, 20c respectively formed therein, the left and right depressed groove portions 20c, 20c being extended in the front and rear direction along the left and right side edges of the screen main part 25a. The front end portions of the left and right groove portions 20c, 20c are extended close to the top edges of the headlights 27, 27, and the rear end portions thereof are extended to the rear edges 20d, 20d of the front covers 20, 20.

A meter unit 28 including a speedometer, a tachometer, and the like is arranged on the front side of the steering handlebar 10. The meter unit 28 has its front portion and upper portion covered with the screen 25.

A support bracket 30 for supporting the screen 25 and the front covers 20, 20 is fixed to the head pipe 15. The support bracket 30 has its front portion, left portion, and right portion covered with the front covers 20, 20 and has its upper portion covered with the screen 25.

The support bracket 30 includes left and right side wall portions 30a, 30a that are fixed to the head pipe 15 with bolts and that are extended forward from the head pipe 15. The left and right side wall portions 30a, 30a have square cylindrical duct portions 30b, 30b formed respectively on their front end portions. The duct portions 30b, 30b have left and right fixing portions 30c, 30c formed respectively on their front edge bottom portions, the left and right fixing portions 30c, 30c being protruded outward in the vehicle width direction from the front edge bottom portions of the duct portions 30b, 30b. Moreover, the duct portions 30b, 30b have left and right support portions 30d, 30d formed respectively on their front edge top end portions, the left and right support portions 30d, 30d being extended outward in the vehicle width direction from the front edge bottom portions of the duct portions 30b, 30b. Furthermore, the left and right support portions 30d, 30d have left and right mirror fixing portions 30e, 30e formed on their outside end portions, the left and right mirror fixing portions 30e, 30e being extended slantwise rearward upward from the outside end portions of the left and right support portions 30d, 30d.

The left and right headlights 27, 27 are fixed to the left and right fixing portions 30c, 30c and to the left and right support portions 30d, 30d, and the meter unit 28 is fixed to the center portion between the left and right support portions 30d, 30d. Moreover, the front covers 20, 20 are fixed to the headlights 27, 27 and the like.

The left and right mirror fixing portions 30e, 30e are positioned rearward of the rear edges 20d, 20d of the front covers 20, 20 when viewed in a plan view, and are positioned below the screen 25 when viewed in a side view. The mirror fixing portions 30e, 30e overlap the screen 25 when viewed in a plan view.

The left and right mirror fixing portions 30e, 30e have mounting or "to-be-fixed" portions 30f, 30f formed respectively on their outside surfaces in the vehicle width direction, and each of the mounting or to-be-fixed portions 30f, 30f has a pair of front and rear bolt holes 30g, 30g and a positioning hole 30h formed therein, the positioning hole 30h being positioned between the front and rear bolt holes 30g, 30g.

Each of the left and right rearview mirrors 26, 26 includes: a support boss portion 32 arranged to be fixed to the mounting portion 30f of the support bracket 30; a stay 33 fixed to the support boss portion 32 so as to turn or be configured between extended (a running-time) and retracted (retraction-time) positions; and a mirror body 34 fixed to the top end portion of the stay 33.

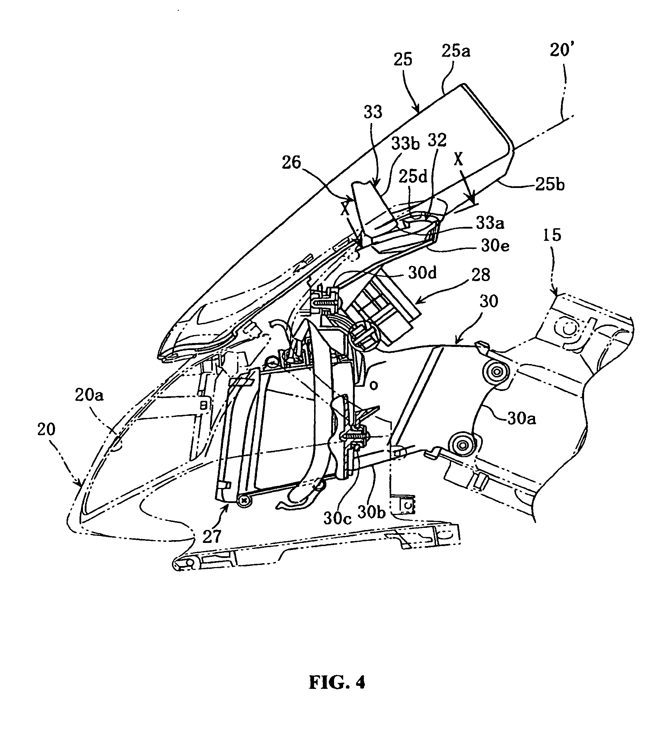

Each of the support boss portion 32, 32 of the left and right rearview mirrors 26, 26 is arranged at a position lower than an extension plane 20', which is obtained by rearward extending the outer surface of a portion 20c' corresponding to the stay 33 of the front cover 20 (see Fig. 1 and Fig. 4), and has the structure to be described below in detail.

Each of the support boss portions 32, 32 includes: a base portion 32a; an expanded portion 32b that connects to the base portion 32a and that is expanded inward in the vehicle width direction in the shape of a trapezoid; and a pair of front and rear bolts 32c, 32c protruded inward in the vehicle width direction from the expanded portion 32b.

The stay 33 includes: a base portion 33a arranged on the top surface of the base portion 32a; and an arm portion 33b extended slantwise upward outward in the vehicle width direction from the base portion 33a. The mirror body 34 is supported so as to be swung by the outer end portion of the arm portion 33b via a ball joint 36.

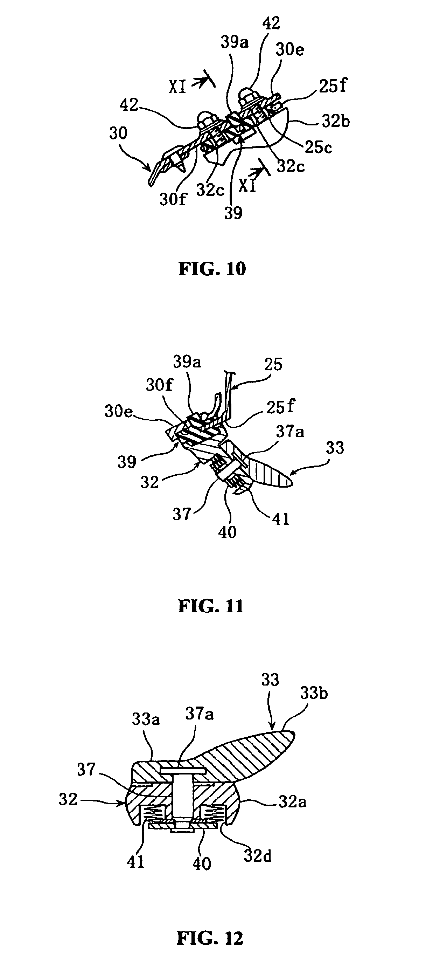

The base portion 33a of the stay 33 is turnably or rotatably coupled to the base portion 32a of the support boss portion 32 by a rotary shaft 37 that intersects with the extension plane 20' and that is extended nearly in the up and down direction (see Fig. 11 and Fig. 12). In this manner, the rearview mirror 26 can be tilted back and fro around the rotary shaft 37 between the extended and retracted positions in which the arm portion 33b is brought close to the flange portion 25b of the screen 25 so as to be nearly parallel to the flange portion 25b.

The stay 33 is a casting of aluminum alloy, and the head portion 37a of the rotary shaft 37 is cast in the base portion 33a of the stay 33. With this, the rotary shaft 37 is integrated with the stay 33, and the head portion 37a of the rotary shaft 37 is buried in the base portion 33a, so that the head portion 37a of the rotary shaft 3 cannot be seen from the outside.

Moreover, the support boss portion 32 is made of aluminum alloy, and the support boss portion 32 and the stay 33 are coated with paint for the exterior parts.

The rotary shaft 37 is passed through the base portion 32a of the support boss portion 32, and has a washer 40 fixed to its protruded end portion by clamping.

Moreover, the base portion 32a has a ring or annular shaped spring-seated portion 32d formed in its bottom portion, and a spring 41 for pressing and biasing the base portion 33a on and to the base portion 32a is arranged between the spring-seated portion 32d and the washer 40.

The support boss portions 32, 32 of the left and right rearview mirrors 26, 26 are fixed to the to-be-fixed portions 30f, 30f of the support bracket 30 with rubber-made elastic parts 39, 39 interposed between them.

Describing in detail, the respective bolts 32c, 32c of the support boss portion 32 are passed through the elastic part 39 and are inserted into the bolt holes 30g, 30g of the mounting portion 30f, and a positioning protrusion 39a formed on the elastic part 39 is inserted into the positioning hole 30h. Then, when cap nuts 42, 42 are fastened to the respective bolts 32c, 32c, the rearview mirror 26 is removably fixed to the support bracket 30 with the elastic part 39 sandwiched between them.

The screen 25 and the elastic part 39 are sandwiched by the mounting portion 30f of the support bracket 30 and the support boss portion 32 of the rearview mirror 26.

Describing in detail, the elastic part 39 has a slit 39b formed therein, the slit 39b having a sandwiched portion 25f of the screen inserted therein. The sandwiched portion 25f is formed on the edge portion of the screen 25f. The sandwiched portion 25f has depressed portions 25c, 25c formed therein, the depressed portions 25c, 25c being formed so as to avoid the screen 25 from interfering with the respective bolts 32c, 32c. The sandwiched portion 25f is sandwiched and fixed by the support boss portion 32 and the support bracket 30 in the state where the to-be-sandwiched portion 25f is inserted into the slit 39b of the elastic part 39.

As described above, the support boss portions 32, 32 of the left and right rearview mirrors 26, 26 and the base portion 33a, 33a of the stays 33, 33 are arranged respectively at lower positions than the extension plane 20' of the front covers 20, 20. With this arrangement, only the arm portions 33b, 33b of the left and right stays 33, 33 are arranged respectively at higher positions than the extension plane 20' of the front covers 20, 20.

The left and right support boss portions 32, 32 are arranged respectively rearward of the rear edges 20d, 20d of the front covers 20, 20. Moreover, the inside portions of the left and right support boss portions 32, 32 are arranged respectively inside in the vehicle width direction of the left and right flange portions 25b, 25b of the screen 25. The inside portions of the left and right support boss portions 32, 32 have cutouts 25d, 25d formed respectively in the depressed shape in their portions corresponding to the arm portions 33b, 33b of the screen 25.

Further, the left and right depressed groove portions 20c, 20c formed in the portions 20c', 20c' corresponding to the stays 33, 33 of the front covers 20, 20 are respectively extended toward the arm portions 33b, 33b of the stays 33, 33. In other words, the arm portions 33b, 33b intersect with groove extension planes 20", 20" obtained by rearward extending the outer surfaces of the depressed groove portions 20c, 20c of the arm portions 33b, 33b, respectively. Thus, the base portions 33a, 33a are positioned below the groove extension planes 20", 20", respectively.

According to this embodiment, the support boss portions 32, 32 of the left and right rearview mirrors 26, 26 and the base portions 33a, 33a of the stays 33, 33 are positioned below the extension planes 20', 20' extended along the outer surfaces of the front covers 20, 20 and below the groove extension planes 20", 20". Thus, it is possible to prevent running wind flowing along the outer surfaces of the front covers 20, 20 from hitting on the support boss portions 32, 32 and the base portions 33a, 33a. In other words, it is possible to reduce a substantial pressure receiving area and hence to reduce air resistance.

The support boss portions 32, 32 are respectively arranged rearward of the rear edges 20d, 20d of the front covers 20, 20. Thus, an outward design can be made better than a conventional structure in which mounting portions to which the mirrors are to be fixed are formed on the front covers.

Moreover, in the case of the conventional structure, for example, when a user runs in a circuit, race track or the like, even if the rearview mirrors 26, 26 are dismounted, the mounting portions are left on the front covers to cause deterioration in design. In the case of this embodiment, when the rearview mirrors 26,26 are dismounted, the mounting portions are not left not only on the outer surfaces of the front covers but also on the extension planes 20', 20' of the outer surfaces, which can improve the outward design and can reduce air resistance.

In this embodiment, the front covers 20, 20 have the depressed groove portions 20c, 20c formed thereon, respectively, the depressed groove portions 20c, 20c being extended respectively toward the left and right stays 33, 33. Thus, the depressed groove portions 20c, 20c can make running wind smoothly flow on the outer surfaces of the front covers 20, 20 and become an accent on the outward design to produce a design effect.

In this embodiment, the head pipe 15 constructing the vehicle body frame 2 has the support brackets 30, 30, and the support brackets 30, 30 have the support boss portions 32, 32 of the rearview mirrors 26, 26 fixed to the to-be-fixed portions 30f, 30f thereof. Thus, this can enhance the rigidity of supporting the rearview mirrors 26, 26 and can prevent the vibrations of the rearview mirrors 26,26 to improve rearward viewability.

Moreover, the existing support brackets 30, 30 for supporting the screen 25 and the headlights 27, 27 have the mounting portions 30f, 30f of the rearview mirrors 26, 26 formed thereon. Thus, the number of parts can be decreased as compared with the case where exclusive brackets for rearview_mirrors are provided.

In this embodiment, the mounting portion 30f, 30f of the support brackets 30, 30 are positioned rearward of the rear edges 20d, 20d of the front covers 20, 20 and below the screen 25. Thus, the mounting portions 30f, 30f are hard to see from the front side of the vehicle. Hence, also in this point of view, the outward appearance can be improved.

The screen 25 has the cutouts 25d, 25d formed therein, so that the support boss portions 32, 32 and the base portions 33a, 33a of the stays 33, 33 can be arranged close to the inside in the vehicle width direction, and the surroundings about the rearview mirrors can be made compact in the outward appearance. Thus, also in this point of view, the outward appearance can be improved. Moreover, although the rearview mirrors 26, 26 can be arranged closer to the inside, a necessary screen area can be ensured to surely produce the effect of protecting the rider from wind.

In this embodiment, the elastic parts 39, 39 are interposed between the mounting portions 30f, 30f of the support brackets 30, 30 and the support boss portions 32, 32 of the rearview mirrors 26, 26, respectively. The elastic parts 39, 39 can absorb vibrations from the vehicle body frame 2 and hence can prevent the vibrations from being transmitted to the rearview mirrors 26, 26.

In this embodiment, the flange portions 25b, 25b of the screen 25 and the elastic parts 39, 39 are sandwiched by the mounting portions 30f, 30f and the support boss portions 32, 32. Thus, this can prevent the vibrations from being transmitted to the screen 25.

In this embodiment, the base portion 33a, 33a of the stays 33, 33 of the rearview mirrors 26, 26 are turnably coupled respectively to the rotary shafts 37, 37 that intersect with the extension planes 20' of the front covers 20, 20 and that extend in the up and down direction, respectively. Thus, the rearview mirrors 26, 26 can be turned between the extended and retracted positions, and the support boss portions 32, 32 and the base portions 33a, 33a can be reduced in size in the direction of the rotary shafts 37, 37 (in the longitudinal direction). Here, the support boss portions 32, 32 and the base portions 33a, 33a can be easily reduced in size in the axial direction (thickness), but the reducing of them in size in the radial direction is difficult because the rotary shafts need to be passed through them. As a result, when the rotary shafts are arranged in the longitudinal direction, the support boss portions 32, 32 and the base portions 33a, 33a can be easily reduced in size in the longitudinal direction.

In this manner, when the rotary shafts 37, 37 are arranged in the up and down direction, the support boss portions 32, 32 and the base portions 33a, 33a can be reduced in size in the up and down direction. Thus, these shafts and portions can be easily arranged at lower positions than the extension planes 20', 20' and by extension the substantial pressure receiving area can be reduced and hence the air resistance can be reduced by that much. In this regard, when the rotary shafts are arranged laterally in the vehicle width direction, the support boss portions and the base portions become large in size in the up and down direction (size in the radial direction), and hence it is difficult to arrange these portions at lower positions than the extension planes. As a result, the substantial pressure receiving area becomes larger and hence the air resistance becomes larger.

In this embodiment, when the stay 33 is formed by casting, the head portion 37a of the rotary shaft 37 is inserted and cast in the base portion 33a. Thus, manufacture cost can be reduced and outward appearance can be made better. That is, when the base portion of the stay is coupled to the support boss portion by a pin, a boot is required to hide the pin, which raises the problem of increasing the number of parts.

Incidentally, while a case where the motorcycle is provided with the pair of left and right rearview mirrors has been described in the embodiment described above, of course, the present invention can be applied also to a case where the motorcycle is provided with either of the left and right rearview mirrors.

### Description of the Reference Numerals

- 1: motorcycle
- 2: vehicle body frame
- 15: head pipe (front end portion of vehicle body frame)
- 20: front cover (vehicle body cover)
- 20': extension plane
- 20c: depressed groove portion
- 20c': portion corresponding to stay
- 20d: rear edge
- 25: screen
- 25d: cutout
- 26: rearview mirror
- 30: support bracket
- 30f: mounting or to-be-fixed portion
- 32: support boss portion
- 33: stay
- 33a: base portion
- 34: mirror body
- 37: rotary shaft
- 37a: head portion (portion of rotary shaft)
- 39: elastic part
- a: one side in vehicle width direction

## Claims

1. A motorcycle (1) comprising:
a vehicle body frame (2);
a screen (25) arranged forward of a front end portion (15) of the vehicle body frame (2);
a vehicle body cover (20) for covering a side of the screen (25); and
a rearview mirror (26) arranged at least on one side in a vehicle width direction of the screen (25),
wherein the vehicle body frame (2) has a mounting portion (30f) to which the rearview mirror (26) is to be fixed, and the rearview mirror (26) has a support boss portion (32) arranged to be fixed to the mounting portion (30f) of the vehicle body frame (2); and **characterized in that**
the support boss portion (32) being arranged at a lower position than an extension plane (20') obtained by rearward extending an outer surface of the vehicle body cover (20) such that the support boss portion (32) and the mounting portion (30f) are not positioned on the outer surface of the vehicle body cover (20).

2. The motorcycle (1) according to claim 1, wherein the support boss potion (32) is arranged rearward of a rear edge (20d) of the vehicle body cover (20).

3. The motorcycle (1) according to claim 1 or 2, wherein the rearview mirror (26) includes a stay (33) fixed to the support boss portion (32) and arranged to be configured between an extended position and a retracted position.

4. The motorcycle (1) according to claim 3, wherein the stay (33) is rotatably mounted relative to the boss portion (32).

5. The motorcycle (1) according to claim 3 or 4, wherein the vehicle body cover (20) has a depressed groove portion (20c) formed therein, the depressed groove portion, being extended toward the stay (33).

6. The motorcycle (1) according to any preceding claim, further comprising a support bracket (30) that is formed on the vehicle body frame (2) and that supports the screen (25), wherein the mounting portion (30f) is formed on the support bracket (30).

7. The motorcycle (1) according to any preceding claim, wherein the mounting portion (30f) is formed rearward of a rear edge (20d) of the vehicle body cover (20) when viewed in a plan view.

8. The motorcycle (1) according to claim 7, wherein the screen (25) has a cutout (25d) formed in a portion where the stay (33) is arranged.

9. The motorcycle (1) according to claim 6, 7 or 8, further comprising an elastic part (39) that is sandwiched between the mounting portion (30f) of the support bracket (30) and the support boss portion (32) of the rearview mirror (26).

10. The motorcycle (1) according to claim 9, wherein the screen (25) is sandwiched by the mounting portion (30f) and the support boss portion (32).

11. The motorcycle (1) according to claim 10, wherein the elastic part (39) is sandwiched between the screen (25) and the support boss portion (32).

12. The motorcycle (1) according to any preceding claim, further comprising a rotary shaft (37) extended in a direction intersecting with the extension plane (20'), wherein a base portion (33a) of a stay (33) of the rearview mirror (26) is coupled to the support boss portion (32) via the rotary shaft (37).

13. The motorcycle (1) according to claim 12, wherein at least the base portion (33a) of the stay (33) is a casting, and a portion of the rotary shaft (37a) in inserted and formed in the base portion (33a).

## Patentansprüche

1. Motorrad (1), das Folgendes umfasst:
einen Fahrzeug-Aufbaurahmen (2),
eine Windschutzscheibe (25), die vor einem vorderen Stirnabschnitt (15) des Fahrzeug-Aufbaurahmens (2) angeordnet ist,
eine Fahrzeug-Aufbauabdeckung (20) zum Abdecken einer Seite der Windschutzscheibe (25) und
einen Rückspiegel (26), der wenigstens auf einer Seite in einer Fahrzeugbreitenrichtung der Windschutzscheibe (25) angeordnet ist,
wobei der Fahrzeug-Aufbaurahmen (2) einen Anbringungsabschnitt (30f) hat, an dem der Rückspiegel (26) zu befestigen ist, und der Rückspiegel (26) einen Stützansatzabschnitt (32) hat, der dafür angeordnet ist, an dem Anbringungsabschnitt (30f) des Fahrzeug-Aufbaurahmens (2) befestigt zu werden, und **dadurch gekennzeichnet**, das s
der Stützansatzabschnitt (32) an einer niedrigeren Position angeordnet ist als eine Erweiterungsebene (20'), gewonnen durch das Erweitern einer Außenfläche der Fahrzeug-Aufbauabdeckung (20) nach hinten derart, dass der Stützansatzabschnitt (32) und der Anbringungsabschnitt (30f) nicht auf der Außenfläche der Fahrzeug-Aufbauabdeckung (20) angeordnet sind.

2. Motorrad (1) nach Anspruch 1, wobei der Stützansatzabschnitt (32) hinter einer Hinterkante (20d) der Fahrzeug-Aufbauabdeckung (20) angeordnet ist.

3. Motorrad (1) nach Anspruch 1 oder 2, wobei der Rückspiegel (26) eine Strebe (33) einschließt, die an dem Stützansatzabschnitt (32) befestigt und dafür angeordnet ist, zwischen einer ausgefahrenen Stellung und einer eingezogenen Stellung konfiguriert zu sein.

4. Motorrad (1) nach Anspruch 3, wobei die Strebe (33) drehbar im Verhältnis zu dem Stützansatzabschnitt (32) angebracht ist.

5. Motorrad (1) nach Anspruch 3 oder 4, wobei die Fahrzeug-Aufbauabdeckung (20) einen in derselben geformten abgesenkten Kehlenabschnitt (20c) hat, wobei sich der abgesenkte Kehlenabschnitt zu der Strebe (33) hin erstreckt.

6. Motorrad (1) nach einem der vorhergehenden Ansprüche, das ferner eine Stützkonsole (30) umfasst, die an dem Fahrzeug-Aufbaurahmen (2) geformt ist und die die Windschutzscheibe (25) trägt, wobei der Anbringungsabschnitt (30f) an der Stützkonsole (30) geformt ist.

7. Motorrad (1) nach einem der vorhergehenden Ansprüche, wobei der Anbringungsabschnitt (30f), gesehen in einer Draufsicht, hinter einer Hinterkante (20d) der Fahrzeug-Aufbauabdeckung (20) geformt ist.

8. Motorrad (1) nach Anspruch 7, wobei die Windschutzscheibe (25) einen Ausschnitt (25d) hat, der in einem Abschnitt geformt ist, wo die Strebe (33) angeordnet ist.

9. Motorrad (1) nach Anspruch 6, 7 oder 8, das ferner ein elastisches Teil (39) umfasst, das zwischen dem Anbringungsabschnitt (30f) der Stützkonsole (30) und dem Stützansatzabschnitt (32) des Rückspiegels (26) eingeklemmt ist.

10. Motorrad (1) nach Anspruch 9, wobei die Windschutzscheibe (25) durch den Anbringungsabschnitt (30f) und den Stützansatzabschnitt (32) eingeklemmt wird.

11. Motorrad (1) nach Anspruch 10, wobei das elastische Teil (39) zwischen der Windschutzscheibe (25) und dem Stützansatzabschnitt (32) eingeklemmt ist.

12. Motorrad (1) nach einem der vorhergehenden Ansprüche, das ferner eine drehbare Welle (37) umfasst, die sich in einer Richtung erstreckt, die sich mit der Erweiterungsebene (20') überschneidet, wobei ein Basisabschnitt (33a) einer Strebe (33) des Rückspiegels (26) über die drehbare Welle (37) an den Stützansatzabschnitt (32) gekoppelt ist.

13. Motorrad (1) nach Anspruch 12, wobei wenigstens der Basisabschnitt (33a) der Strebe (33) ein Gussteil ist und ein Abschnitt der drehbaren Welle (37) in dem Basisabschnitt (33a) eingefügt und geformt ist.

## Revendications

1. Motocycle (1), comprenant:
un châssis de la carrosserie du véhicule (2) ;
un pare-brise (25), agencé vers l'avant d'une partie d'extrémité avant (15) du châssis de la carrosserie du véhicule (2) ;
un capot de la carrosserie (20) pour recouvrir un côté du pare-brise (25) ; et
un rétroviseur (26), agencé au moins sur un côté du pare-brise (25), dans une direction de la largeur du véhicule ;
le châssis de la carrosserie du véhicule (2) comportant une partie de montage (30f, sur laquelle doit être fixé le rétroviseur (26), le rétroviseur (26) comportant une partie de bossage de support (32) configurée de sorte à être fixée sur la partie de montage (30f) du châssis de la carrosserie du véhicule (2) ; et **caractérisé en ce que**
la partie de bossage de support (32) est agencée au niveau d'une position plus basse qu'un plan d'extension (20') obtenu en étendant vers l'arrière une surface externe du capot de la carrosserie (20), de sorte que la partie de bossage de support (32) et la partie de montage (30f) ne sont pas positionnées sur la surface externe du capot de la carrosserie du véhicule (20).

2. Motocycle (1) selon la revendication 1, dans lequel la partie de bossage de support (32) est agencée vers l'arrière d'un bord arrière (20d) du capot de la carrosserie du véhicule (20).

3. Motocycle (1) selon la revendication 1 ou 2, dans lequel le rétroviseur (26) englobe un montant, (33) fixé sur la partie de bossage de support (32) et configuré de sorte à être ajusté entre une position étendue et une position rétractée.

4. Motocycle (1) selon la revendication 3, dans lequel le montant (33) est monté de manière rotative sur la partie de bossage (32).

5. Motocycle (1) selon la revendication 3 ou 4, dans lequel le capot de la carrosserie du véhicule (20) comporte une partie de rainure en creux (20c) qui y est formée, la partie de rainure en creux étant étendue vers le montant (33).

6. Motocycle (1) selon l'une quelconque des revendications précédentes, comprenant en outre une console de support (30) formée sur le châssis de la carrosserie du véhicule (2) et supportant le pare-brise (25), la partie de montage (30f) étant formée sur la console de support (30).

7. Motocycle (1) selon l'une quelconque des revendications précédentes, dans lequel la partie de montage (30f) est formée vers l'arrière d'un bord arrière (20d) du capot de la carrosserie du véhicule (20), vue dans une vue en plan.

8. Motocycle (1) selon la revendication 7, dans lequel le pare-brise (25) comporte une entaille (25d) formée dans une partie dans laquelle est agencé le montant (33).

9. Motocycle (1) selon la revendication 6, 7 ou 8, comprenant en outre une partie élastique (39), agencée en sandwich entre la partie de montage (30f) de la console de support (30) et la partie de bossage de support (32) du rétroviseur (26).

10. Motocycle (1) selon la revendication 9, dans lequel le pare-brise (25) est agencé en sandwich entre la partie de montage (30f) et la partie de bossage de support (32).

11. Motocycle (1) selon la revendication 10, dans lequel la partie élastique (39) est agencée en sandwich entre le pare-brise (25) et la partie de bossage de support (32).

12. Motocycle (1) selon l'une quelconque des revendications précédentes, comprenant en outre un arbre rotatif (37) étendu dans une direction coupant le plan d'extension (20'), une partie de base (33a) d'un montant (33) du rétroviseur (26) étant accouplée à la partie de bossage de support (32) par l'intermédiaire de l'arbre rotatif (37).

13. Motocycle (1) selon la revendication 12, dans lequel au moins la partie de base (33a) du montant (33) constitue une pièce coulée, une partie de l'arbre rotatif (37a) étant insérée et formée dans la partie de base (33a).
